# EUROPÄISCHE PATENTANMELDUNG

(11) **EP 2 644 306 A1**
(43) Veröffentlichungstag der Anmeldung: **02.10.2013**
(21) Anmeldenummer: 12161904.3
(22) Anmeldetag: 28.03.2012
(51) Int. Cl.: B23K 9/167, B23K 9/12

(54) **Schweißvorrichtung und ein Verfahren zur Regelung eines Schweißprozesses**

(71) Anmelder: Plasch, Siegfried, 4600 Wels (AT)
(72) Erfinder: Plasch, Siegfried, 4600 Wels (AT)
(74) Vertreter: Jell, Friedrich

(57) **Zusammenfassung**

Es wird eine Schweißvorrichtung und ein Verfahren zur Regelung mindestens eines Parameters in der Drahtzuführung (3) eines widerstandserwärmten Schweißdrahts (19) zu einem Schweißbrenner (2), insbesondere WIG-Brenner, einer Schweißvorrichtung (1) gezeigt, wobei der Schweißdraht (19) über eine, insbesondere am Schweißbrenner (2) befestigte, Drahtdüse (17) der Drahtzuführung (3) geführt wird, bei dem mindestens eine elektrische Größe des Schweißdrahts (19) gemessen und zur Regelung herangezogen wird. Um eine besondere Schweißgüte zu erreichen, wird vorgeschlagen, dass in Abhängigkeit der gemessenen elektrischen Größe des Schweißdrahts (19) die Lage der Drahtdüse (17) gegenüber dem Schweißbrenner (2) als ein Regelparameter in der Drahtzuführung (3) des Schweißdrahts (19) eingestellt wird.

## Beschreibung

Die Erfindung betrifft eine Schweißvorrichtung und ein Verfahren zur Regelung mindestens eines Parameters in der Drahtzuführung eines widerstandserwärmten Schweißdrahts zu einem Schweißbrenner, insbesondere WIG-Brenner, einer Schweißvorrichtung, wobei der Schweißdraht über eine, insbesondere am Schweißbrenner befestigte, Drahtdüse der Drahtzuführung geführt wird, bei dem mindestens eine elektrische Größe des Schweißdrahts gemessen und zur Regelung herangezogen wird.

Aus dem Stand der Technik ist eine Regelung einer Drahtzuführung zu einem WIG-Brenner bekannt (EP0139249B1), bei der die Widerstandserwärmung des geführten Schweißdrahts in Abhängigkeit der gemessenen Strom- und Spannungsdaten geregelt wird. Damit soll eine für den Lichtbogen des WIG-Brenners nachteilige magnetische Interferenz mit dem Widerstandsstrom des Schweißdrahts vermindert werden. Im Zuge dieses Vorgangs führen Abweichungen des Abstands des WIG-Brenners zum Werkstück einerseits zu einer Verschiebung des Arbeitspunkts beim Lichtbogenschweißen und andererseits zu veränderten Voraussetzungen in der Schweißdrahtzuführung. Die Regelung der Widerstandsheizung des Schweißdrahts kann diese veränderten Voraussetzungen jedoch nicht kompensieren. Zu beachten ist zudem, dass Abstandsregelungen des WIG-Brenners zum Werkstück unter Verwendung von Lichtbogensensoren zwar zu einer Stabilisierung des Arbeitspunkts beim Lichtbogenschweißen beitragen können, diese führen jedoch zu einem in dieser Lage inadäquaten Verbrauch an Schweißzusatz. Aus dem Stand der Technik bekannte Brenner bedingen also eine beeinträchtigte Schweißnahtgüte und können kein reproduzierbares Schweißverfahren gewährleisten.

Die Erfindung hat sich daher die Aufgabe gestellt, ausgehend vom eingangs geschilderten Stand der Technik ein Verfahren zur Regelung der Schweißdrahtzuführung derart zu verbessern, dass stabile Arbeitspunkte mit exakter Scheißdrahtzuführung gewährleistet werden - wobei eine besonders hohe Toleranz gegenüber Lichtbogenschwankungen bestehen soll. Des Weiteren soll damit das erfindungsgemäße Verfahren eine hohe Schweißgeschwindigkeit gewährleisten.

Die Erfindung löst die gestellte Aufgabe dadurch, dass in Abhängigkeit der gemessenen elektrischen Größe des Schweißdrahts die Lage der Drahtdüse gegenüber dem Schweißbrenner als ein Regelparameter in der Drahtzuführung des Schweißdrahts eingestellt wird.

Wird in Abhängigkeit der gemessenen elektrischen Größe des Schweißdrahts die Lage der Drahtdüse gegenüber dem Schweißbrenner als ein Regelparameter in der Drahtzuführung des Schweißdrahts eingestellt, kann die Drahtzuführung schnell und zuverlässig auf Änderungen des Abstands zwischen Schweißbrenner und Werkstück reagieren und für eine exakte bzw. gleichbleibende Zuführung eines Schweißdrahts sorgen. Eine Lageänderung der Drahtdüse kann nämlich, ohne dass eventuelle Dämpfungseigenschaften in der Drahtzuführung des Schweißdrahts berücksichtigt werden müssen, mit hoher Dynamik vorgenommen werden, sodass damit unmittelbar korrigierend auf eine Lage des Schweißdrahtendes gegenüber dem Schweißbad eingewirkt werden kann. Durch das erfindungsgemäße Verfahren kann dadurch selbst dann eine hohe Schweißnahtgüte gewährleistet werden, wenn aufgrund hoher Schweißgeschwindigkeiten schnelle Änderungen von Lichtbogenlängen kompensiert werden müssen. Im Gegensatz zum Stand der Technik kann somit eine gegenüber Parameterschwankungen besonders tolerante, schnelle und dennoch exakte Schweißdrahtzuführung zur Verfügung gestellt werden.

Die erfindungsgemäße Regelung der Lage der Drahtdüse kann auch bei einer Vorschubbewegung des Schweißdrahts mit einer überlagerten Hin- und Her-Bewegung zum bzw. vom Schweißbrenner vorteilhafte Verfahrensverhältnisse schaffen, um auf veränderte Schweißparameter am Schweißbad reagierten zu können. Die elektrischen Messgrößen am Schweißdraht können nämlich auch Aufschluss über den Grad der Durchmischung der Materialien von Werkstück sowie Schweißdraht geben, welcher Durchmischungsgrad sich im Wesentlichen durch die Hin- und Her-Bewegung des Schweißdrahts ergibt. Aufgrund der erfindungsgemäßen Verfahrensverhältnisse kann sich so eine besonders hohe Schweißgüte ergeben.

Wird der Abstand der Elektrode des Schweißbrenners zum Werkstück in Abhängigkeit des Lichtbogenwiderstands seines Lichtbogens geregelt, kann eine Drahtzuführung eventuellen Parameteränderungen des Schweißvorgangs entsprechend ungestört folgen und für eine exakte Zuführung des Schweißzusatzes sorgen. Eine besonders hochwertige Schweißnaht kann durch das erfindungsgemäße Verfahren reproduzierbar geschaffen werden.

Das Verfahren kann insbesondere ermöglichen, dass der Schweißdraht der Elektrode als nachlaufender Schweißdraht in Bewegungsrichtung des Schweißbrenners zugeführt werden kann. Solch eine nachlaufende Zuführung erfordert nämlich eine exakte Ausrichtung des Schweißdrahtendes gegenüber Lichtbogen bzw. Schweißbad, um ein vollständiges Aufschmelzen des Schweißdrahts für eine homogene Schweißraupe bzw. -naht zu gewährleisten. Dies kann mithilfe des erfindungsgemäßen Verfahrens ohne weiteres durch seine vergleichsweise hohe Dynamik hinsichtlich der Lageregelung des Schweißdrahts gegenüber dem Schweißbrenner sichergestellt werden. Erfindungsgemäß kann daher möglich werden, dem Brenner einen Schweißdraht sicher, aus Sicht der Bewegungsrichtung des Brenners von hinten zuzuführen.

Die vorgenannten Vorteile können auch genützt werden, wenn der Schweißdraht der Elektrode als vorlaufender Schweißdraht in Bewegungsrichtung des Schweißbrenners zugeführt wird. Insbesondere kann dadurch die Erfindung erlauben, eine vor- und nachlaufende Zuführung von Schweißdraht individuell zu regeln bzw. auf die gewünschten Schweißparameter abzustimmen. Trotz eventuell hoher Mengen an Schweißzusatz durch zwei Drahtzuführungen kann damit eine besonders hohe Schweißgüte sichergestellt werden.

Führt der Schweißbrenner ein Orbitalschweißen aus, können Schwankungen im Rohrdurchmesser regelnd kompensiert und damit auch hier hohe Schweißgüte erreicht werden.

Einfache Verfahrensverhältnisse können sich ergeben, wenn die Lage der Drahtdüse gegenüber dem Schweißbrenner wenigstens einachsig linear verstellt wird. Außerdem können Linearführungen vorteilhaft für eine präzise Positionierung der Drahtdüse gegenüber dem Schweißbrenner bzw. damit gegenüber dem Schweißbad genützt werden, wodurch eine besonders hohe Reproduzierbarkeit des Schweißverfahrens erreicht werden kann.

Die Erfindung hat sich zudem die Aufgabe gestellt, eine Schweißvorrichtung mit einem Schweißbrenner, insbesondere WIG-Brenner, zur Verfügung zu stellen, dem standfest ein Schweißdraht als Schweißzusatz zugeführt werden kann.

Die Erfindung löst hinsichtlich der Schweißvorrichtung die Aufgabe dadurch, dass die Drahtdüse am Schweißbrenner über eine elektromechanisch betätigbare Führung, insbesondere Linearführung, beweglich gelagert ist, wobei die Mess- und Regeleinrichtung in Abhängigkeit der gemessenen elektrischen Größe des Schweißdrahts mit der Führung zur Verstellung der Lage der Drahtdüse gegenüber dem Schweißbrenner verbunden ist.

Einfache Konstruktionsverhältnisse für eine standfeste und genaue Zuführung von Schweißdraht zu einem Schweißbrenner können sich ergeben, wenn die Drahtdüse am Schweißbrenner über eine elektromechanisch betätigbare Führung, insbesondere Linearführung, beweglich gelagert ist, wobei die Mess- und Regeleinrichtung in Abhängigkeit der gemessenen elektrischen Größe des Schweißdrahts mit der Führung zur Verstellung der Lage der Drahtdüse gegenüber dem Schweißbrenner verbunden ist, um die Lage der Drahtdüse gegenüber dem Brenner zu verstellen. Eine lineare Verschiebung der Drahtdüse über elektrische Linearantriebe oder eine Drehverstellung über elektrische Winkelantriebe ist denkbar. Außerdem kann durch diese Verstellungsmöglichkeit die Drahtzuführung hochdynamisch auf Arbeitspunktveränderungen des Brenners reagieren, was eine genaue Mengenzufuhr an Schweißzusatz sicherstellen und stets Schweißnähte mit hoher Güte ermöglichen kann.

Um einen konstanten Arbeitspunkt des Schweißbrenners einzustellen, kann eine Lichtbogenabstandsregelung zum Regeln des Abstands der Elektrode des Schweißbrenners zum Werkstück in Abhängigkeit des Lichtbogenwiderstands seines Lichtbogens vorgesehen sein.

Hohe Mengen an Schweißzusatz können zugeführt werden, wenn in Bewegungsrichtung des Schweißbrenners vor und nach dem Schweißbrenner Drahtzuführungen vorgesehen sind. Erfindungsgemäß kann durch trotz getrennter Regelung der Abstände der jeweiligen Drahtdüse zum Schweißbrenner eine hohe Schweißgüte sichergestellt werden.

Der Erfindungsgegenstand ist beispielsweise anhand von Figuren zu einem Ausführungsbeispiels näher dargestellt. Es zeigen
Fig. 1 einer vereinfachen Ansicht auf eine teilweise dargestellte Schweißvorrichtung und
Fig. 2 eine abgerissene Detailansicht der Fig. 1.

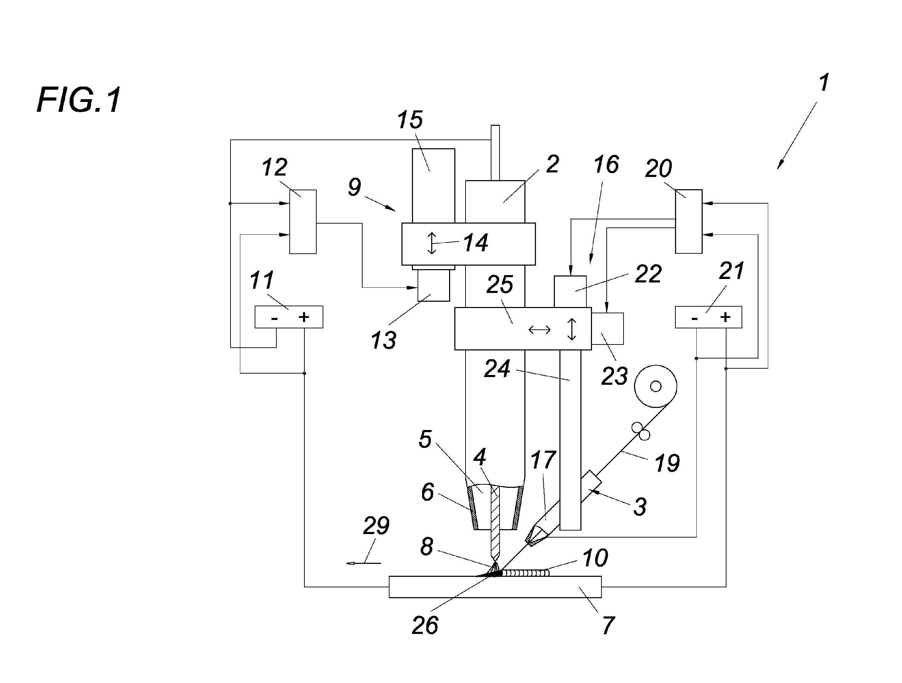

Die nach Fig. 1 dargestellte Schweißvorrichtung 1 zeigt im Wesentlichen einen als WIG-Brenner ausgeführten Schweißbrenner 2 und eine Drahtzuführung 3, die am Brenner 2 befestigt ist. Der Schweißbrenner 2 führt mittig eine Elektrode 4 bzw. Wolframelektrode, die mit Schutzgas 5 umspült wird und einer Schutzgasdüse 6 vorsteht, um zwischen Elektrode 4 und Werkstück 7 einen Lichtbogen 8 für ein Lichtbogenschweißen zu erzeugen. Der Schweißbrenner 2 weist eine Abstandsregelung 9 auf, die den Abstand zwischen Elektrode 4 und Werkstück 7 konstant hält, um einen stabilen Arbeitspunkt für eine exakte Schweißnaht 10 sicherzustellen. Zu diesem Zweck wird die Lichtbogenspannung des Lichtbogens 8 als eine elektrische Größe gemessen.

Eine mit der Elektrode 4 und dem Werkstück 7 elektrisch verbundene Gleichstromquelle 11 erzeugt den Lichtbogen 8. Ein Gleichstromschweißen kann so geschaffen werden. Es ist jedoch auch ein Wechselstromschweißen denkbar. Die Messdaten der Lichtbogenspannung werden von einer Lichtbogenabstandsregelung 12 zur Ansteuerung eines Motors 13 verwendet, den Brenner entlang einer senkrecht zum Werkstück liegenden Achse 14 einer Linearführung 15 zu verstellen.

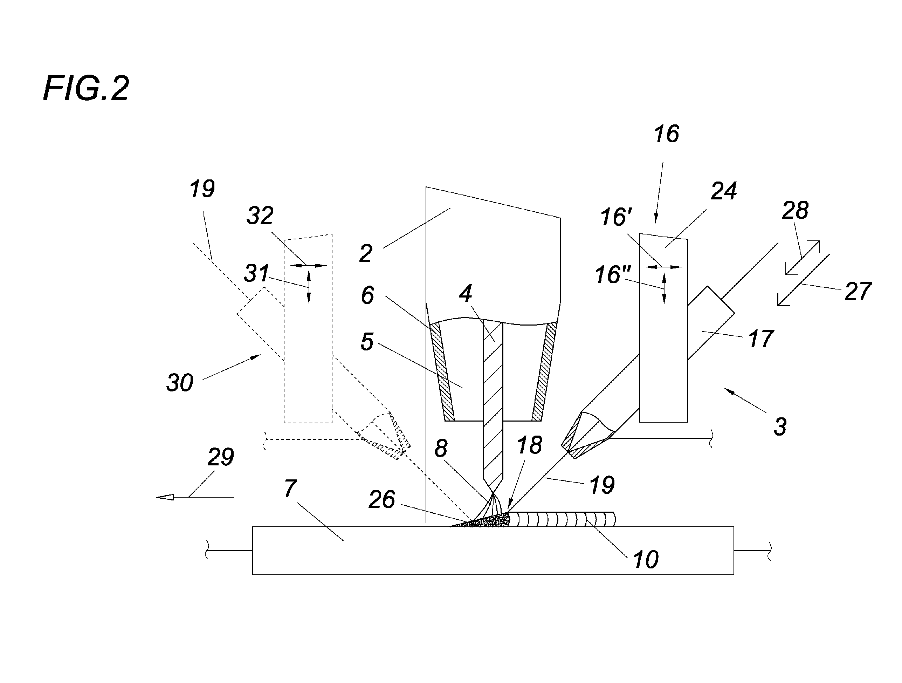

Um nun trotz Abstandsregelung 9 des Brenners 2, und seine damit einhergehende Verschiebung gegenüber dem Werkstück 7, eine präzise und hochdynamische Drahtzuführung 3 gewährleisten zu können, zeigt die Erfindung eine entlang zweier Achsen 16', 16" bewegliche Lagerung 16 der Drahtdüse 17 der Drahtzuführung 3 gegenüber dem Brenner 2, was der Fig. 2 besser entnommen werden kann. Mit einer Verlagerung der Drahtdüse 17 kann nämlich das Schweißdrahtende 18 des Schweißdrahts 19 schnell den Schweißbedingungen entsprechend nachgeführt bzw. diesbezüglich eingestellt werden. Der Schweißdraht 19 wird als Heißdraht zugeführt, indem dieser mit einer Gleichstromquelle 21 widerstandserwärmt wird. Zu diesem Zweck sind die Drahtdüse 17, die in elektrischem Kontakt mit dem Schweißdraht 19 steht, und das Werkstück 7 elektrisch mit der Gleichstromquelle 21 verbunden. Zur Regelung der Lage der Drahtdüse 17 ist eine Mess- und Regeleinrichtung 20 vorgesehen, die in Abhängigkeit einer gemessenen elektrischen Größe des Schweißdrahts 19 die Motoren 22 und 23 der Linearführungen 24 und 25 ansteuert. Beispielsweise kann als elektrische Größe die Spannung zwischen der Drahtdüse 17 und dem Werkstück 7 gemessen werden, anhand der bzw. anhand deren Änderung während des Schweißens eine Regelung der Drahtzuführung 3 greift. Eine Strommessung ist ebenfalls denkbar. Die Drahtdüse 17 ist, wie dargestellt, zweiachsig linear verstellbar, kann jedoch alternativ oder zusätzlich auch eine Rotation geneigt zur Drahtzuführungsrichtung durchführen.

Zur Zuführung von Schweißdraht 19 zum Schweißbad 26 führt dieser Schweißdraht 19 eine Vorschubbewegung 27 aus, die von einer Hin- und Her-Bewegung 28 überlagert wird.

Wie insbesondere der Fig. 2 zu entnehmen, wird der Schweißdraht 19 als nachlaufender Schweißdraht 19 der Elektrode 4 in Bewegungsrichtung 29 des Brenners 2 von hinten zugeführt, um selbst bei hohen Schweißgeschwindigkeiten vergleichsweise große Mengen an Schweißzusatz zur Verfügung stellen zu können. Diese Mengen an Schweißzusatz können erhöht werden, wenn vor dem Brenner 2 ebenso eine Drahtzuführung 30 für Schweißdraht 19 vorgehen wird. Diese Drahtzuführung 30 ist konstruktiv gleich zur Drahtzuführung 3 ausgeführt und so auch entlang von zwei Achsen 31 und 32 gegenüber dem Brenner 2 verstellbar. Mit einer getrennten Regelung der Drahtzuführung 3 und 30 kann so entsprechend den Verhältnissen vor dem Brenner 2 und nach dem Brenner 2 die Zuführung an Schweißdraht 19 jeweils angepasst werden. Trotz hoher Menge an Schweißzusatz ist so eine hohe Schweißgüte zu gewährleisten.

## Patentansprüche

1. Verfahren zur Regelung mindestens eines Parameters in der Drahtzuführung (3) eines widerstandserwärmten Schweißdrahts (19) zu einem Schweißbrenner (2), insbesondere WIG-Brenner, einer Schweißvorrichtung (1), wobei der Schweißdraht (19) über eine, insbesondere am Schweißbrenner (2) befestigte, Drahtdüse (17) der Drahtzuführung (3) geführt wird, dem mindestens eine elektrische Größe des Schweißdrahts (19) gemessen und zur Regelung herangezogen wird, **dadurch gekennzeichnet, dass** in Abhängigkeit der gemessenen elektrischen Größe des Schweißdrahts (19) die Lage der Drahtdüse (17) gegenüber dem Schweißbrenner (2) als ein Regelparameter in der Drahtzuführung (3) des Schweißdrahts (19) eingestellt wird.

2. Verfahren nach Anspruch 1, **dadurch gekennzeichnet, dass** der Schweißdraht (19) mit einer Hin- und Her-Bewegung (28) zum Schweißbrenner (2) vorgeschoben wird.

3. Verfahren nach Anspruch 1 oder 2, **dadurch gekennzeichnet, dass** der Abstand der Elektrode (4) des Schweißbrenners (2) zum Werkstück (7) in Abhängigkeit des Lichtbogenwiderstands seines Lichtbogens (8) geregelt wird.

4. Verfahren nach Anspruch 1, 2 oder 3, **dadurch gekennzeichnet, dass** der Schweißdraht (19) der Elektrode (4) als nachlaufender Schweißdraht (19) in Bewegungsrichtung (29) des Schweißbrenners (2) zugeführt wird.

5. Verfahren nach einem der Ansprüche 1 bis 4, **dadurch gekennzeichnet, dass** der Schweißdraht (19) der Elektrode (4) als vorlaufender Schweißdraht (19) in Bewegungsrichtung (29) des Schweißbrenners (2) zugeführt wird.

6. Verfahren nach einem der Ansprüche 1 bis 5, **dadurch gekennzeichnet, dass** der Schweißbrenner (2) ein Orbitalschweißen ausführt.

7. Verfahren nach einem der Ansprüche 1 bis 6, **dadurch gekennzeichnet, dass** die Lage der Drahtdüse (17) gegenüber dem Schweißbrenner (2) wenigstens einachsig linear verstellt wird.

8. Schweißvorrichtung mit einem eine Elektrode (4) aufweisenden Schweißbrenner (2), insbesondere WIG-Brenner, mit einem widerstandserwärmten Schweißdraht (19), einer insbesondere am Schweißbrenner (2) befestigten Drahtzuführung (3) für den Schweißdraht (19) zum Schweißbrenner (2), wobei die Drahtzuführung (3) eine am Schweißbrenner (2) befestigte Drahtdüse (17) zur Drahtführung des Schweißdrahts (19) aufweist, mit einer Mess- und Regeleinrichtung (20) zur Messung mindestens einer elektrischen Größe der Schweißvorrichtung (1) und zur Abstandsregelung (9) der Schweißvorrichtung gegenüber dem zu schweißenden Werkstück (7) in Abhängigkeit der gemessenen elektrischen Größe, **dadurch gekennzeichnet, dass** die Drahtdüse (17) am Schweißbrenner (2) über eine elektromechanisch betätigbare Führung (16), insbesondere Linearführung (25 bzw. 24), beweglich gelagert ist, wobei die Mess- und Regeleinrichtung (20) in Abhängigkeit der gemessenen elektrischen Größe des Schweißdrahts (19) mit der Führung (16) zur Verstellung der Lage der Drahtdüse (17) gegenüber dem Schweißbrenner (2) verbunden ist.

9. Schweißvorrichtung nach Anspruch 8, **dadurch gekennzeichnet, dass** eine Lichtbogenabstandsregelung (12) zum Regeln des Abstands der Elektrode (4) des Schweißbrenners (2) zum Werkstück (7) in Abhängigkeit des Lichtbogenwiderstands seines Lichtbogens (8) vorgesehen ist.

10. Schweißvorrichtung nach Anspruch 8 oder 9, **dadurch gekennzeichnet, dass** in Bewegungsrichtung (29) des Schweißbrenners vor und nach dem Schweißbrenner (2) Drahtzuführungen (3, 30) vorgesehen sind.
